# EUROPEAN PATENT APPLICATION

(11) **EP 4 726 199 A2**
(43) Date of publication of application: **15.04.2026**
(21) Application number: 26157086.5
(22) Date of filing: 25.01.2022
(51) Int. Cl.: F02K 5/00

(54) **HYBRID POWER PLANT FOR AIRCRAFT**

(30) Priority: 25.01.2021 US 202117156933
(62) Divisional of application: 22153320.1
(71) Applicant: Pratt & Whitney Canada Corp., (01BE5) Longueuil, QC J4G 1A1 (CA)
(72) Inventor: VALOIS, Patrick, (01BE5) Longueuil, J4G 1A1 (CA); TURCOTTE, Herve, (01BE5) Longueuil, J4G 1A1 (CA); FREER, Richard, (01BE5) Longueuil, J4G 1A1 (CA); TREMBLAY, Jonatan, (01BE5) Longueuil, J4G 1A1 (CA); LATULIPE, Eric, (01BE5) Longueuil, J4G 1A1 (CA)
(74) Representative: Dehns

(57) **Abstract**

A hybrid aircraft power plant has a gas turbine engine (10) has a high-pressure spool (25) including a high-pressure compressor (25a), a high-pressure turbine (25b), and a high-pressure shaft (25c) drivingly engaging the high-pressure turbine (25b) to the high-pressure compressor (25a), a low-pressure spool (24) including a low-pressure compressor (24a), a low-pressure turbine (24b), and a low-pressure shaft (24c) drivingly engaging the low-pressure turbine (24b) to the low-pressure compressor (24a), an electric motor (32) drivingly engaged to the low-pressure shaft (24c), and a torque-transmitting device operatively connected to the high-pressure shaft (25c) and having an engaged configuration in which the torque-transmitting device drivingly engages the electric motor (32) to the high-pressure shaft (25c) and a disengaged configuration in which the torque-transmitting device disconnects the electric motor (32) from the high-pressure shaft (25c).

## Description

### TECHNICAL FIELD

The application relates generally to hybrid power plants for aircrafts including a gas turbine engine and an electric motor.

### BACKGROUND OF THE ART

Hybrid electric aircraft propulsion systems combine combustion and electric propulsion technologies. In an electric propulsion system, electrical energy is converted to mechanical energy by an electric motor to drive a rotor, such as a prolusion fan or a propeller. There are environmental and cost benefits to having at least a portion of the power for an aircraft propulsion system to come from electric motors.

### SUMMARY

In one aspect, there is provided an hybrid aircraft power plant, comprising: a gas turbine engine having a high-pressure spool including a high-pressure compressor, a high-pressure turbine, and a high-pressure shaft drivingly engaging the high-pressure turbine to the high-pressure compressor, a low-pressure spool including a low-pressure compressor, a low-pressure turbine, and a low-pressure shaft drivingly engaging the low-pressure turbine to the low-pressure compressor; an electric motor drivingly engaged to the low-pressure shaft; and a torque-transmitting device operatively connected to the HP-shaft and having an engaged configuration in which the torque-transmitting device drivingly engages the electric motor to the high-pressure shaft and a disengaged configuration in which the torque-transmitting device disconnects the electric motor from the high-pressure shaft.

In an embodiment of the above, the hybrid aircraft power plant includes a transmission including the torque-transmitting device, the transmission having an input drivingly engaged by the electric motor, a first output drivingly engageable to the low-pressure shaft, and a second output drivingly engageable to the high-pressure shaft, the transmission operable in a first configuration in which the electric motor is drivingly engaged to the high-pressure shaft through the transmission and in a second configuration in which the electric motor is disengaged from the high-pressure shaft.

In an embodiment of any of the above, the torque-transmitting device is a clutch, the engaged configuration corresponding to the first configuration of the transmission and the disengaged configuration corresponding to the second configuration of the transmission.

In an embodiment of any of the above, the clutch is a sprag clutch, the sprag clutch transmitting a torque from the electric motor to the high-pressure shaft when the electric motor rotates at a higher rotational speed than that of the high-pressure shaft.

In an embodiment of any of the above, the electric motor is drivingly engaged to the low-pressure shaft in both of the first configuration and the second configuration of the transmission.

In an embodiment of any of the above, the transmission is further operable in a third configuration in which the electric motor is drivingly engaged to the low-pressure shaft through the transmission and in a fourth configuration in which the low-pressure shaft is disengaged from the electric motor.

In an embodiment of any of the above, the transmission includes a second clutch between the electric motor and the low-pressure shaft, the second clutch having an engaged configuration corresponding to the third configuration of the transmission and a disengaged configuration corresponding to the fourth configuration of the transmission.

In an embodiment of any of the above, the torque-transmitting device is a continuously variable transmission (CVT) having a CVT input drivingly engaged by the electric motor and a CVT output drivingly engaging the high-pressure shaft, the CVT operable to control a torque transmitted from the electric motor to the high-pressure shaft.

In an embodiment of any of the above, the power plant includes a second CVT having a second CVT input drivingly engaged by the electric motor and a second CVT output drivingly engaging the low-pressure shaft, the second CVT operable to control a torque transmitted from the electric motor to the low-pressure shaft.

In an embodiment of any of the above, the torque-transmitting device is a gear assembly having a master gear drivingly engaged to the electric motor, a first slave gear drivingly engaged to the high-pressure shaft, and a second slave gear drivingly engaged to the low-pressure shaft, the master gear is movable in a first position in which the master gear is meshed with the first slave gear and disengaged from the second slave gear, the master gear is movable in a second position in which the master gear is meshed with the second slave gear and disengaged from the first slave gear, the master gear is movable in a neutral position in which the master gear and the electric motor are disengaged from both of the first slave gear and the second slave gear and disengaged from both of low-pressure shaft and the high-pressure shaft.

In an embodiment of any of the above, the electric motor is drivingly engaged to the low-pressure shaft, the torque-transmitting device being a sprag clutch operatively connected to both of the high-pressure shaft and the low-pressure shaft, the sprag clutch operable to transmit a torque from the low-pressure shaft to the high-pressure shaft when a rotational speed of the low-pressure shaft is greater than that of the high-pressure shaft.

In another aspect, there is provided a method of starting a hybrid aircraft power plant including a gas turbine engine and an electric motor drivingly engaged to an electric motor, comprising: drivingly engaging the electric motor to a high-pressure spool of the gas turbine engine; increasing a rotational speed of the high-pressure spool to a target rotational speed; igniting a mixture of air and fuel into a combustor of the gas turbine engine when the rotational speed of the high-pressure spool is at the target rotational speed; and transmitting a torque between a low-pressure spool of the gas turbine engine and the electric motor.

In an embodiment of the above, the electric motor is disengaged from the high-pressure spool after the igniting of the mixture of the air and the fuel in to the combustor.

In an embodiment of any of the above, the drivingly engaging of the electric motor to the high-pressure spool includes switching a clutch from a disengaged configuration to an engaged configuration or includes operating a continuously variable transmission in a torque transmission mode.

In an embodiment of any of the above, the drivingly engaging of the electric motor to the high-pressure spool includes driving the low-pressure spool with the electric motor and transmitting a torque from the low-pressure shaft to the high-pressure shaft via a sprag clutch.

In an embodiment of any of the above, the drivingly engaging of the electric motor to the high-pressure spool includes meshing a master gear drivingly engaged to the electric motor with a first slave gear drivingly engaged to the high-pressure spool, and wherein the transmitting of the torque between the electric motor and the low-pressure spool includes disengaging the master gear from the first slave gear and meshing the master gear to a second slave gear drivingly engaged to the low-pressure spool.

In an embodiment of any of the above, the transmitting of the torque between the electric motor and the low-pressure spool of the gas turbine engine includes switching a clutch from a disengaged configuration to an engaged configuration or includes operating a continuously variable transmission in a torque transmission mode.

In yet another aspect, there is provided an hybrid aircraft power plant, comprising: a gas turbine engine having a high-pressure spool including a high-pressure compressor, a high-pressure turbine, and a high-pressure shaft drivingly engaging the high-pressure turbine to the high-pressure compressor, a low-pressure spool including a low-pressure compressor, a low-pressure turbine, and a low-pressure shaft drivingly engaging the low-pressure turbine to the low-pressure compressor; an electric motor drivingly engaged to an electric motor, the electric motor drivingly engaged to the low-pressure shaft; and means for selectively drivingly engaging the electric motor to the high-pressure shaft.

In an embodiment of the above, the means are able to engage the electric motor to both of the high-pressure shaft and to the low-pressure shaft simultaneously.

In an embodiment of any of the above, the means are able to drivingly engage the electric motor to the low-pressure shaft while disengaging the electric motor from the high-pressure shaft.

### DESCRIPTION OF THE DRAWINGS

Reference is now made to the accompanying figures in which:
Fig. 1 is a schematic side cross sectional view of an hybrid aircraft power plant including a turboprop gas turbine engine, an electric module, and a transmission in accordance with one embodiment for engaging the electric module to the turboprop gas turbine engine;
Fig. 2 is a schematic side cross sectional view of an hybrid aircraft power plant including a turboshaft gas turbine engine equipped with the electric module and transmission of Fig. 1;
Fig. 3 is a schematic side cross sectional view of a first exemplary embodiment of the transmission depicted in Figs. 1 and 2;
Fig. 4 is a schematic side cross sectional view of a second exemplary embodiment of a transmission to couple the electric module to the turboprop or turboshaft gas turbine engines of Figs. 1 and 2;
Fig. 5 is a schematic side cross sectional view of a third exemplary embodiment of a transmission to couple the electric module to the turboprop or turboshaft gas turbine engines of Figs. 1 and 2;
Fig. 6 is a schematic side cross sectional view of a fourth exemplary embodiment of a transmission to couple the electric module to the turboprop or turboshaft gas turbine engines of Figs. 1 and 2;
Fig. 7 is a schematic side cross sectional view of a fifth exemplary embodiment of a transmission to couple the electric module to the turboprop or turboshaft gas turbine engines of Figs. 1 and 2;
Fig. 8 is a schematic side cross sectional view of a sixth exemplary embodiment of a transmission to couple the electric module to the turboprop or turboshaft gas turbine engines of Figs. 1 and 2;
Fig. 9 is a schematic side cross sectional view of a seventh exemplary embodiment of a transmission to couple the electric module to the turboprop or turboshaft gas turbine engines of Figs. 1 and 2;
Fig. 10 is a schematic side cross sectional view of an hybrid aircraft power plant in accordance with another embodiment including a turboprop gas turbine engine and an electric module;
Fig. 11 is a schematic side cross sectional view of an hybrid aircraft power plant in accordance with yet another embodiment including a turboshaft gas turbine engine equipped with an electric module; and
Fig. 12 is a schematic view of a control system for controlling an interaction between the electric module and the turboprop or turboshaft gas turbine engines of Figs. 1 and 2.

### DETAILED DESCRIPTION

In at least some of the figures that follow, some elements appear more than once (e.g. there may be two, three, etc. of a given part in a given embodiment). Accordingly, only a first instance of each given element may be labeled, to maintain clarity of the figures.

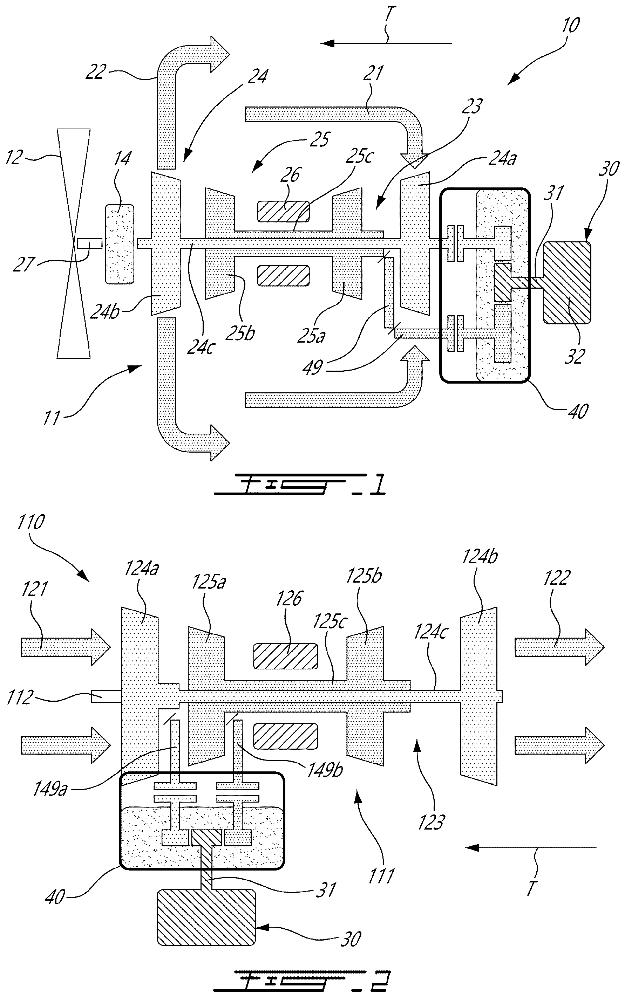

Referring to Fig. 1, an hybrid aircraft power plant is shown at 10. The hybrid aircraft power plant 10 is referred to herein below simply as "power plant 10" for the sake of conciseness. The power plant 10 includes a thermal module depicted here as a gas turbine engine 11. The gas turbine engine 11 is shown in Fig. 1 as being a turboprop gas turbine engine drivingly engaged to a propeller 12 via a reduction gearbox 14.

The gas turbine engine 11 includes an inlet 21 at a rear of the gas turbine engine 11 relative to a direction of travel T of the power plant 10. The gas turbine engine 11 includes an exhaust 22 at a front of the power plant 10 relative to the direction of travel T. The gas turbine engine 11 is therefore a reverse-flow engine in that air flows from the inlet 21 to the exhaust 22 in an annular gas path 23 from the rear to the front in the same direction as the direction of travel T.

The gas turbine engine 11 includes a low-pressure (LP) spool 24 and a high-pressure (HP) spool 25. The term "spool" is herein intended to broadly refer to drivingly connected turbine and compressor rotors and is, thus, not limited to a compressor and turbine assembly on a single shaft. It also includes a rotary assembly with multiple shafts geared together. The **LP** spool 24 includes a **LP** compressor 24a, a **LP** or power turbine 24b, and a **LP** shaft 24c drivingly engaging the **LP** turbine 24b to the **LP** compressor 24a. The **HP** spool 25 includes a **HP** compressor 25a, **a HP** turbine 25b, and a **HP** shaft 25c drivingly engaging the **HP** turbine 25b to the **HP** compressor 25a. The gas turbine engine 11 includes a combustor 26 between the **HP** turbine 25b and the **HP** compressor 25a. In the embodiment shown, the **HP** shaft 25c is hollow and the **LP** shaft 24c extends within the **HP** shaft 25c. Other configurations are contemplated.

Air enters the gas turbine engine 11 via the inlet 21 and flows into the annular gas path 23 through the **LP** compressor 24a and through the **HP** compressor 25a located downstream of the **LP** compressor 24a relative to a direction of the flow into the annular gas path 23. The air, now compressed, is mixed with fuel into the combustor 26 and is ignited thereby generating combustion gases. The combustion gases flow out of the combustor 26 into the **HP** turbine 25b, which extracts energy from the combustion gases to drive the **HP** compressor 25a via the **HP** shaft 25c. The combustion gases then flow through the **LP** or power turbine 24b located downstream of the **HP** turbine 25b relative to the direction of the flow through the annular gas path 23. The **LP** turbine 24b extracts power from the combustion gases to drive the **LP** compressor 24a via the **LP** shaft 24c. The **LP** turbine 24b further drivingly engages the propeller 12 via the reduction gearbox 14. The reduction gearbox 14 drives the propeller 12 via an output shaft 27.

In some cases, it might be required to provide a boost of power to the gas turbine engine 11 and/or to help starting the gas turbine engine 11. The power plant 10 further includes an electric module 30 configured for compounding power with the gas turbine engine 11 in driving the propeller 12. The electric module 30 may be engaged to the **LP** spool 24 and/or to the **HP** spool 25. **In** the embodiment shown, a transmission 40 acts as an interface between the electric module 30 and the **LP** and **HP** spools 24, 25. The transmission 40 is secured to the rear of the turboprop gas turbine engine 11. The electric module 30 is drivingly engaged to the gas turbine engine 11 via the transmission 40. In the present disclosure, the expression "electric module" may include one or more electric motor(s) 32 drivingly engaged to a single shaft 31. That is, the electric module 30 may include a plurality of electric motors, disposed in series or in parallel, that compound their power to drive the single shaft 31.

The transmission 40 is used to drivingly engage the electric module 30 to the **LP** shaft 24c alone, to the **HP** shaft 25c alone, and/or to both of the **LP** and **HP** shafts 24c, 25c. The transmission 40 may include clutches to selective engage or disengage the electric module 30 from the **LP** and **HP** shafts 24c, 25c. The transmission 40 may include a gearbox to divide a rotational input received from the electric module 30 between the **LP** and **HP** shafts 24c, 25c. Many possible embodiments of the transmission are described below.

In the embodiment shown, a series of intermediary shafts 49 are used to connect the transmission 40 to the **HP** shaft 25c. It will be understood that any suitable connection may be used to drivingly engage the transmission 40 to the **HP** shaft 25. The intermediary shafts 49 may be drivingly engaged to one another using bevel gears, universal joints, or any other suitable means. One of the intermediary shafts 49 is located radially outside the annular gas path 23 relative to an axis of rotation of the **HP** and **LP** shafts 25c, 24c. Although said intermediary shafts 49 are shown as being connected at a rear of the **HP** shaft 25c, they may alternatively be connected at a front thereof.

Referring now to Fig. 2, a hybrid aircraft power plant is shown at 110. The power plant 110 includes a gas turbine engine 111. The gas turbine engine 111 is shown in Fig. 2 as being a turboshaft gas turbine engine drivingly engaged to an output shaft 112. The output shaft 112 may be engaged to any rotatable load such as, for instance, a helicopter rotor. The power plant 110 includes a thermal module corresponding to the gas turbine engine 111. The power plant 110 includes the electric module 30 configured for compounding power with the gas turbine engine 111 in driving the output shaft 112.

The gas turbine engine 111 includes an inlet 121 at a front of the gas turbine engine 111 relative to the direction of travel T of the power plant 110. The gas turbine engine 111 includes an exhaust 122 at a rear of the power plant 110 relative to the direction of travel T. The gas turbine engine 111 is therefore a through-flow engine in that air flows from the inlet 121 to the exhaust 122 in an annular gas path 123 from the front to the rear in an opposite direction as the direction of travel T.

The gas turbine engine 111 includes a low-pressure (LP) spool and a high-pressure (HP) spool. The LP spool includes a LP compressor 124a, a LP or power turbine 124b, and a LP shaft 124c drivingly engaging the LP turbine 124b of the LP compressor 124a. The HP spool includes a HP compressor 125a, a HP turbine 125b, and a HP shaft 125c drivingly engaging the HP turbine 125b to the HP compressor 125a. The gas turbine engine 111 includes a combustor 126 between the HP turbine 125b and the HP compressor 125a. In the embodiment shown, the HP shaft 125c is hollow and the LP shaft 124c extends within the HP shaft 125c. Other configurations are contemplated.

Air enters the gas turbine engine 111 via the inlet 121 and flows into the annular gas path 123 through the LP compressor 124a and through the HP compressor 125a located downstream of the LP compressor 124a relative to a direction of the flow into the annular gas path 123. The air, now compressed, is mixed with fuel into the combustor 126 and is ignited thereby generating combustion gases. The combustion gases flow out of the combustor 126 into the HP turbine 125b, which extracts energy from the combustion gases to drive the HP compressor 125a via the HP shaft 125c. The combustion gases then flow through the LP or power turbine 124b located downstream of the HP turbine 125b relative to the direction of the flow through the annular gas path 123. The LP turbine 124b extracts power from the combustion gases to drive the LP compressor 124a via the LP shaft 124c. The LP turbine 124b further drivingly engages the output shaft 112 and the rotatable load connected thereto.

The power plant 110 includes the same electric module 30 and transmission 40 described herein above with reference to Fig. 1. The transmission 40 is secured closer to the front of the turboshaft gas turbine engine 11. In the embodiment shown, the transmission 40 is drivingly engaged to the LP and HP shafts 124c, 125c via first and second intermediary shafts 149a, 149b, respectively, that extend generally transverse to the LP and HP shafts 124c, 125c. Bevel gears may be used to drivingly engage the two shafts 149a, 149b to the LP and HP shafts 124c, 125c. Other configurations are contemplated.

It will be appreciated that the HP shaft 25c, 125c is selectively drivingly engaged to the electric motor 30 via the single shaft 31. A torque-transmitting device is used to selectively engage the single shaft 31 to the HP shaft 25c, 125c. The torque-transmitting device has an engaged configuration in which the single shaft 31 is drivingly engaged to the high-pressure shaft 25c, 125c and a disengaged configuration in which the single shaft 31 is disengaged from the high-pressure shaft 25c, 125c. The torque-transmitting device, as will be described below, may be any suitable means able to selectively drivingly engage the HP shaft 25c, 125c to the electric motor 30. The torque-transmitting device may be, for instance, a clutch, a sprag clutch, a gear assembly, a continuously variable transmission (CVT), and so on. Any suitable types of clutches may be used as explained below. Another torque-transmitting device may be used to selectively drivingly engage the LP shaft 24c, 124c to the electric motor 30 as explained below. The means may be able to engage the electric motor to both of the high-pressure shaft and to the low-pressure shaft simultaneously. The means may be able to drivingly engage the electric motor to the low-pressure shaft while disengaging the electric motor from the high-pressure shaft.

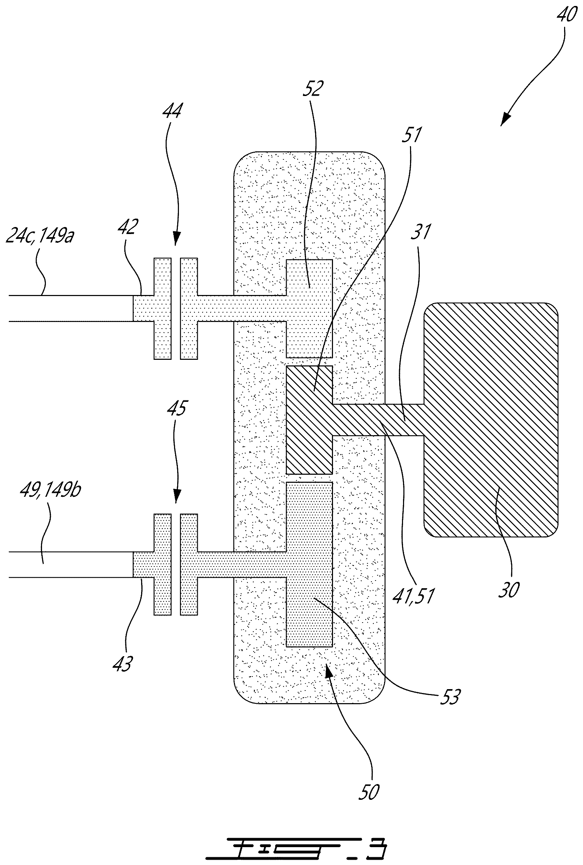

Referring now to Fig. 3, the transmission 40 that may be used with either one of the power plant 10 of Fig. 1 or with the power plant 110 of Fig. 2 is described in greater detail below. The transmission 40 is operable in a first configuration in which the electric motor shaft 31 is drivingly engaged to the low-pressure shaft 24c, 124c through the transmission 40 and in a second configuration in which the low-pressure shaft 24c, 124c is disengaged from the electric motor shaft 31. The transmission is operable in a third configuration in which the electric motor shaft 31 is drivingly engaged to the high-pressure shaft 25c, 125c through the transmission 40 and in a fourth configuration in which the electric motor shaft 31 is disengaged from the high-pressure shaft 25c, 125c.

The transmission 40 has an input 41, a first output 42, and a second output 43. The transmission 40 includes a first clutch 44 and a second clutch 45. The first input 41 is drivingly engaged to the electric module 30 via the single shaft 31. The first output 42 is drivingly engaged to the LP shaft 24c. The second output 43 is drivingly engaged to the HP shaft 25c. The expression "clutch" as used herein encompasses any device able to selectively drivingly engage two elements with one another. For instance, any suitable clutch may be used such as, for instance, friction clutch, centrifugal clutch, dog/spline clutch, hydraulic clutch, electromagnetic clutch, and so on. Each of the first and second clutches 44, 45 has an engaged configuration in which the electric module 30 is drivingly engaged to a respective one of the LP and HP shafts 24c, 25c and a disengaged configuration in which the electric module 30 is disengaged from the respective one of the LP and HP shafts 24c, 25c. The engaged configuration of the first clutch 44 corresponds to the first configuration of the transmission 40. The disengaged configuration of the first clutch 44 corresponds to the second configuration of the transmission 40. The engaged configuration of the second clutch 45 corresponds to the third configuration of the transmission 40. And, the disengaged configuration of the second clutch 45 corresponds to the fourth configuration of the transmission 40.

In the embodiment of Fig. 3, the transmission 40 contains two clutches so the state of each clutch at any one time may determine the configuration of transmission 40. For example, there may be four configurations possible for transmission 40: both clutches 44, 45 engaged, both clutches 44, 45 disengaged, first clutch 44 engaged while second clutch 45 is disengaged, and second clutch 45 engaged while first clutch 44 is disengaged.

In the depicted embodiment, the transmission 40 includes a gear assembly, also referred to as an accessory gearbox (AGB), 50 having a master gear 51 that is drivingly engaged to the single shaft 31 that connects the electrical module 30 to the transmission 40. The gear assembly may be part of a gearbox that may be used to drive other accessories, such as pumps, generators, and so on. The transmission 40 has a first slave gear 52 meshed with the master gear 51. The first slave gear 52 is drivingly engaged to the first output 42 of the transmission 40 through the first clutch 44. The transmission 40 has a second slave gear 53 meshed with the master gear 51. The second slave gear 53 is drivingly engaged to the second output 43 of the transmission 40 through the second clutch 45. It will be appreciated that any suitable gear assembly may be used without departing from the scope of the present disclosure. For instance, a planetary gear may be used. Alternatively, straps and pulleys may be used. Any suitable means able to transmit a rotational input may be used. Although only three gears are depicted, more than three gears may be used to cater to distances between the different shafts and/or to provide speed ratios.

Referring to Figs. 1-3, the electric module 30 may be used in a torque configuration or a speed configuration. In the torque configuration, the electric module 30 compounds power with one or both of the LP and HP shafts 24c, 25c, 124c, 125c. In the speed configuration, the electric module 30 may be operated such that no torque is provided by the electric module 30 to the one or both of the LP and HP shafts 24c, 25c, 124c, 125c and that no energy is used by the gas turbine engines 11, 111 to drive the electric motor 30. In other words, in the speed configuration, the electric module 30 is operated to minimize resistance on the LP and HP shafts 24c, 25c, 124c, 125c. In the speed configuration, the electric motor may also be used to maintain a target spool rotational speed by providing varying positive or negative torque if so desired.

The electric module 30 may be used for starting the gas turbine engines 11, 111. In such a case, the second clutch 45 is configured in its engaged configuration to drivingly engage the electric module 30 to the HP shaft 25c via the gear assembly 50 and the second clutch 45. Rotation of the HP spool is therefore induced by powering the electric module 30. Once a desired rotational speed of the HP shaft 25c, 125c is achieved, a mixture of air and fuel into the combustion chamber 26, 126 may be ignited. The electric module 30 may continue to drivingly engage the HP shaft 25c, 125c until its rotational speed corresponds to an idle rotational speed. Once the idle rotational speed is achieved, a torque target of the electric module 30 may be set to zero to off-load the transmission 40. In some cases, the electric module 30 may be operated in generator mode to extract energy from the HP shaft 25c, 125c. Alternatively, the electric module 30 may be powered to a target rotational speed to minimize a speed difference across the second clutch 45. At some point, the second clutch 45 is switched to its disengaged configuration to disengage the electric module 30 from the HP shaft 25c, 125c. A rotational speed of the electric module 30 may be varied until a speed difference across the first clutch 44 is minimized. Once this speed matching is achieved, the first clutch 44 may be switched to its engaged configuration to drivingly engage the electric module 30 to the LP shaft 24c, 124c through the gear assembly 50 and the first clutch 44. The electric module 30 may therefore be powered in torque mode to compound power with the LP shaft 24c, 124c to help the gas turbine engine 11, 111 driving the propeller 12 or the output shaft 112. In some cases, the electric module 30 may be operated in generator mode to extract energy from the LP shaft 24c, 124c to generate electricity. In some other cases, the electric module 30 may be operated in speed mode such that the electric module 30 does not provide any torque to the LP shaft 24c, 124c and does not extract energy from the LP shaft 24c, 124c.

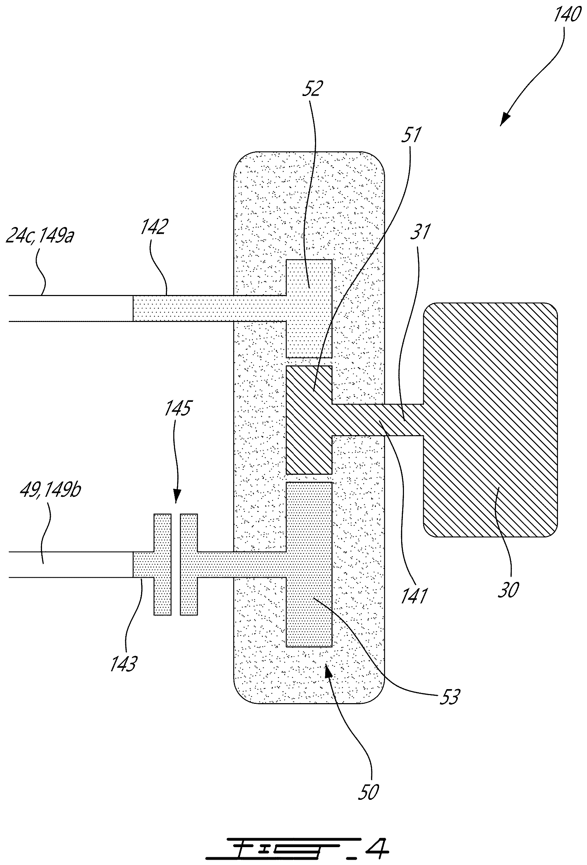

A plurality of alternative configurations of transmissions are described herein below with reference to Figs. 4-9.

Referring now to Fig. 4, a transmission in accordance with another embodiment is shown at 140. The transmission 140 described below with reference to Fig. 4 may be used with any of the turboprop gas turbine engine 11 of Fig. 1 and with the turboshaft gas turbine engine 111 of Fig. 2.

The transmission 140 includes an input 141 drivingly engaged to the electric module 30 via the single shaft 31. The transmission 140 includes a first output 142 and a second output 143. In the embodiment shown the first output 142 is permanently drivingly engaged to the LP shaft 24c, 124c of the gas turbine engine 11, 111. That is, in this embodiment, the electric module 30 is continuously and always engaged to the LP shaft 24c. The second output 142 is selectively drivingly engageable to the HP shaft 25c via the intermediary shafts 49 for the turboprop engine 11 of Fig. 1 and via the second intermediary shaft 149b for the turboshaft engine 111 of Fig. 2 as explained above. The transmission 140 includes a clutch 145 that selectively engages the electric module 30 to the HP shaft 25c through the gear assembly 50 and the clutch 145. The clutch 145 has a disengaged configuration in which the electric module 30 is disengaged from the HP shaft 25c, 125c and an engaged configuration in which the electric module 30 is drivingly engaged to the HP shaft 25c. 125c.

The electric module 30 may be operated in a power generation mode in which the LP shaft 24c, 124c drives the electric module 30 as a generator to generate electricity. The electric module 30 may be operated in a speed configuration in which a rotational speed of the electric module 30 is selected to minimize a rotational resistance on the LP shaft 24c, 124c. The electric module 30 may be operated in a torque configuration in which the electric module 30 provides torque to compound power with the LP shaft 24c, 124c in driving the propeller 12 or the output shaft 112.

Since the electric module 30 is, in the depicted embodiment, permanently coupled to the LP shaft 24c, 124c, higher engine starting torque may be required from the electric module 30 since inertia of the LP spool and of the propeller 12 (Fig. 1) or of the output shaft 112 (Fig. 2) would be added to that of the HP spool, but may be a simpler mechanical arrangement. Moreover, less steps may be required since only one clutch has to be disengaged after the engine is started. The clutch 145 may be switched to its disengaged configuration by electronic control, or mechanically upon reaching a speed or torque threshold.

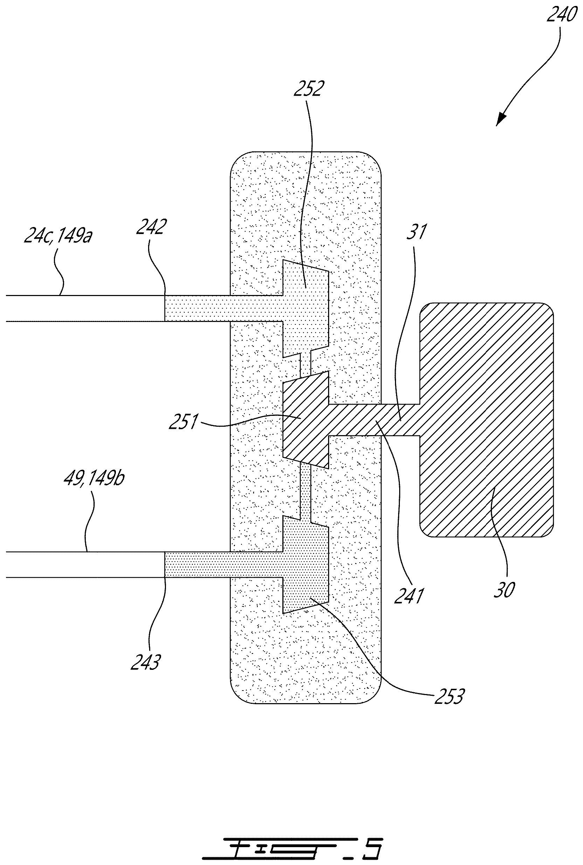

Referring now to Fig. 5, another configuration of a transmission is shown at 240. The transmission 240 includes an input 241 drivingly engaged to the electric module 30 via the single shaft 31. The transmission 240 includes a first output 242 and a second output 243. In the embodiment shown, the transmission 240 includes a master pulley 251 that is drivingly engaged to the input 241 of the transmission 240. The master pulley 251 is drivingly engaged to a pulley of a first continuously variable transmission (CVT) 252 and to a pulley of a second CVT 253. The first CVT 252 is drivingly engaged to the first output 242 of the transmission 240 and the second CVT 253 is drivingly engaged to the second output 243 of the transmission 240. In other words, the electric module 30 is drivingly engageable to the LP shaft 24c, 124c via the first CVT 252. The electric module 30 is drivingly engageable to the HP shaft 25c, 125c via the second CVT 253. The expression "CVT" as used herein encompasses any type of transmission with continuously variable speed ratio between the input and output. The concept is hereby described and illustrated for a belt and pulley type of CVT. Alternatively, friction discs or hydraulic types CVTs may be used.

The first and second CVTs 252, 253 are operable to vary a speed ratio between their respective inputs driven by the master pulley 251 and their respective outputs engaged respectively to the LP and HP shafts. The first and second CVTs 252, 253 may be electronically controlled or may be mechanically controlled as a function of a transmitted torque. In the embodiment shown, the electric module 30 may be operated in a speed configuration in which a rotational speed of the electric module 30 is selected to minimize a rotational resistance on the LP shaft 24c, 124c or HP shaft 25c, 125c. The electric module 30 may be operated in a torque configuration in which the electric module 30 provides torque to compound power with the LP shaft 24c, 124c or HP shaft 25c, 125c. When starting the engine, the second CVT 253 is configured to be able to transmit a rotational input from the electric module 30 to the second output 243 of the transmission 240. When the gas turbine engine 11, 111 reaches a speed threshold, a speed ratio generated by the second CVT 253 may be selected to avoid torque transmission through the second CVT 253. After the engine 11, 111 is started, the first CVT 252 may be configured to allow the electric module 30 to transfer torque to the LP shaft 24c, 124c. The electric module 30 may also be used in generator mode to extract energy, via the transmission 240, from the HP shaft 25c, 125c, or from the LP shaft 24c, 124c.

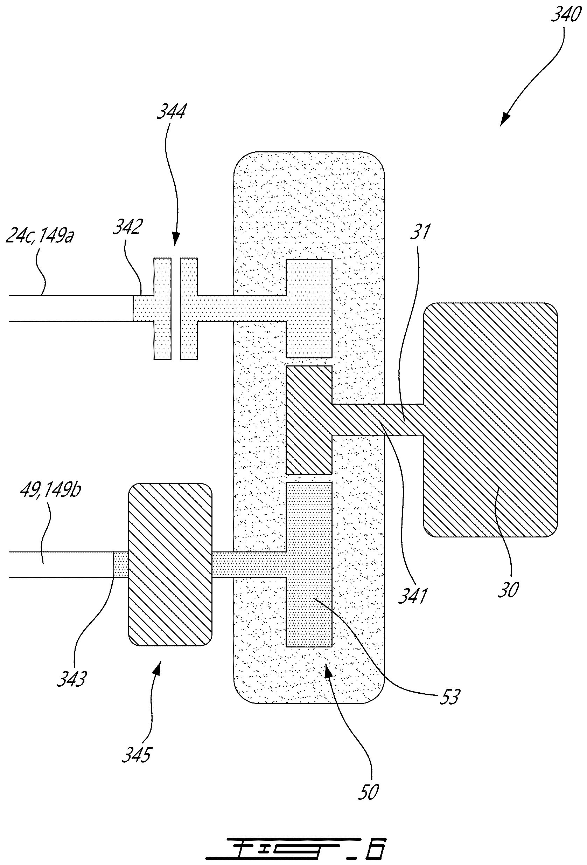

Referring now to Fig. 6, a transmission in accordance with another embodiment is shown at 340. The transmission 340 may be used with either of the power plant 10 of Fig. 1 and with the power plant 110 of Fig. 2 and is described in greater detail below.

The transmission 340 has an input 341, a first output 342, and a second output 343. The transmission 340 includes a first clutch 344 and a sprag clutch 345. The input 341 is drivingly engaged to the electric module 30 via the single shaft 31. The input 341 is selectively drivingly engageable to the LP shaft 24c, 124c via the first clutch 344 and drivingly engageable to the HP shaft 25c, 125c via the sprag clutch 345.

The transmission 340 includes the gear assembly 50 described above with reference to Fig. 3. The sprag clutch 345 allows torque transmission from the electric module 30 to the HP shaft 25c, 125c when a rotational speed at an input of the sprag clutch 345 is greater than that at an output of the sprag clutch 345. Hence, when starting the engine 11, 111, the HP shaft 25c, 125c is not rotating. A torque generated by the electric module 30 is transmitted via the single shaft 31 to the gear assembly 50 and from the gear assembly 50 to the HP shaft 25c, 125c via the sprag clutch 345. Once the HP shaft 25c, 125c reaches a rotational speed threshold, air and fuel in the combustion chamber 26, 126 are ignited. At some point, a rotational speed of the HP shaft 25c, 125c increases such that a rotational speed at the output of the sprag clutch 345 is greater than a rotational speed at its input. The HP shaft 25c, 125c becomes effectively disengaged from the electric module 30 and the HP shaft 25c, 125c may rotate without receiving or providing a torque to the electric module 30. In other words, the HP shaft 25c, 125c becomes disengaged from the electric module 30 once the HP shaft 25c, 125c reaches a given rotational speed threshold and, in the present embodiment, when the intermediary shaft 49 (Fig. 1) and second intermediary shaft 149b rotate faster than the second slave gear 53.

After the engine 11, 111 is started, the first clutch 344 may be switched to its engaged configuration and the electric module 30 may be operated in torque mode such that a torque generated by the electric module 30 is transmitted to the LP shaft 24c, 124c via the first clutch 344 and the gear assembly 50. In some cases, the electric module 30 may be operated in generator mode to extract energy from the LP shaft 24c, 124c.

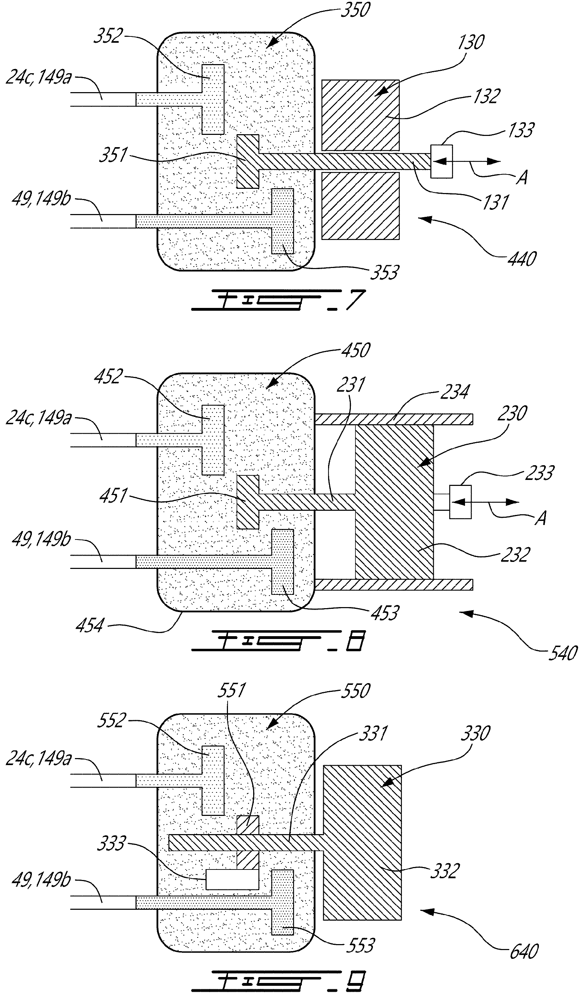

Referring now to Fig. 7, a transmission in accordance with another embodiment is shown at 440. The transmission 440 may be used with either of the power plant 10 of Fig. 1 and with the power plant 110 of Fig. 2 and is described in greater detail below.

In the embodiment shown, the electric module 130 includes an electric motor 132 in driving engagement with a shaft 131. The shaft 131 is movable axially about an axis of rotation of the shaft 131 and relative to the electric motor 132 along a direction depicted by arrow A in Fig. 7. The shaft 131 may be a splined shaft to allow a sliding motion relative to the electric motor 132. An actuator 133 is operatively connected to the shaft 131 to move the shaft along arrow A. The gear assembly 350 includes a master gear 351 that is drivingly engaged to the shaft 131. The master gear 351 is fixedly connected to the shaft 131. The master gear 351 may be monolithic with the shaft 131. The shaft 131 and the master gear 351 secured thereto are movable between a first position in which the master gear 351 is meshed with the first slave gear 352 and in which the electric module 130 is in driving engagement with the LP shaft 24c, 124c; a second position in which the master gear 351 is meshed with the second slave gear 353 and in which the electric module 130 is in driving engagement with the HP shaft 25c, 125c; and a neutral position depicted in Fig. 7 in which the electric module 130 is disengaged from both of the LP and HP shafts 24c, 124c, 25c, 125c.

The actuator 133 is therefore operable to move the shaft 131 along the arrow A to selectively mesh the master gear 351 with either the first slave gear 352 or with the second slave gear 353 or to dispose the master gear 351 in its neutral position. The actuator 133 may be a solenoid, a hydraulic actuator, a pneumatic actuator, or any other suitable actuators.

Referring now to Fig. 8, a transmission in accordance with another embodiment is shown at 540. The transmission 540 may be used with either of the power plant 10 of Fig. 1 and with the power plant 110 of Fig. 2 and is described in greater detail below.

In the embodiment shown, the electric module 230 includes an electric motor 232 in driving engagement with a shaft 231. The electric motor 232 is received within a housing 234. The housing 234 is secured to an enclosure 454 of the gear assembly 450. The shaft 231 and the electric motor 232 are axially slidably movable within the housing 234 along arrow A about an axis of rotation of the shaft 231. An actuator 233 is operatively connected to the electric motor 232 to axially move the electric motor 232 and the shaft 231 along arrow A. The gear assembly 450 includes a master gear 451 that is drivingly engaged to the shaft 231. The master gear 451 is fixedly connected to the shaft 231. The master gear 451 may be monolithic with the shaft 231. The electric motor 232, the shaft 231, and the master gear 451 secured to the shaft 231 are movable between a first position in which the master gear 451 is meshed with the first slave gear 452 and in which the electric module 230 is in driving engagement with the LP shaft 24c, 124c; a second position in which the master gear 451 is meshed with the second slave gear 453 and in which the electric module 230 is in driving engagement with the HP shaft 25c, 125c; and a neutral position depicted in Fig. 8 and in which the electric module 230 is disengaged from both of the LP and HP shafts 24c, 124c, 25c, 125c.

The actuator 233 is therefore operable to move the shaft 231 and the electric motor 232 along the arrow A to selectively mesh the master gear 451 with either the first slave gear 452 or with the second slave gear 453 or to dispose the master gear 451 in its neutral position. The actuator 233 may be a solenoid, a hydraulic actuator, a pneumatic actuator, or any other suitable actuators.

Referring now to Fig. 9, a transmission in accordance with another embodiment is shown at 640. The transmission 640 may be used with either of the power plant 10 of Fig. 1 and with the power plant 110 of Fig. 2 and is described in greater detail below.

In the embodiment shown, the electric module 330 includes an electric motor 332 in driving engagement with a shaft 331. The master gear 551 of the gear assembly 550 is drivingly engaged to the shaft 331 and is axially slidable relative to the shaft 331 about an axis of rotation of the shaft 331. A spline coupling may be used between the master gear 551 and the shaft 331. An actuator 333 secured within an enclosure of the gear assembly 550 is operatively connected to the master gear 551 to axially move the master gear 551 along the shaft 331.

The master gear 551 is movable between a first position in which the master gear 551 is meshed with the first slave gear 552 and in which the electric module 330 is in driving engagement with the LP shaft 24c, 124c; a second position in which the master gear 551 is meshed with the second slave gear 553 and in which the electric module 330 is in driving engagement with the **HP** shaft 25c, 125c; and a neutral position depicted in Fig. 9 and in which the electric module 330 is disengaged from both of the LP and HP shafts 24c, 124c, 25c, 125c.

The actuator 333 is therefore operable to move the master gear 551 to selectively mesh the master gear 551 with either the first slave gear 552 or with the second slave gear 553 or to dispose the master gear 551 in its neutral position. The actuator 333 may be a solenoid, a hydraulic actuator, a pneumatic actuator, or any other suitable actuators.

Referring to Figs. 7-9, to start the gas turbine engine 11, 111, the electric module 130, 230, 330 is drivingly engaged to the HP shaft 25c, 125c by moving the master gear 351, 451, 551 in meshing engagement with the second slave gear 353, 453, 553. The electric module 130, 230, 330 is set in torque mode or in speed mode. The electric module 130, 230, 330 is operated to reach torque or speed targets to assist ignition (rotate the HP shaft 25c, 125c at optimum ignition conditions until a temperature rise in the gas turbine engine 11, 111 is observed) and then helps the HP shaft 25c, 125c accelerate to an idle rotational speed. In some cases, when the electric module 130, 230, 330 is drivingly engaged to the HP shaft 25c, 125c, the electric module 130, 230, 330 may be operated in torque mode to provide torque assist or in power extraction mode to generate electricity.

The HP shaft 25c, 125c may be disengaged from the electric module 130, 230, 330 either by setting a torque target of the electric module 130, 230, 330 to zero to off-load the transmission 440, 540, 640 or by setting a speed target of the electric module 130, 230, 330 to match a speed of the second slave gear 353, 453, 553 such that speed is matched but that there is no torque transmission between the electric module and the HP shaft. At which point, the electric module 130, 230, 330 may be disengaged from the HP shaft 25c, 125c. In the embodiment shown, the disengagement of the electric module 130, 230, 330 from the HP shaft 25c, 125c is done by disengaging the master gear 351, 451, 551 from the first slave gear 353, 453, 553.

In some cases, the electric module 130, 230, 330 may be shut down. To do so, the electric module may be set to speed mode and the speed may be set to a minimum controllable speed or to zero to decelerate the motor rapidly. Then, the electric module 130, 230, 330 may be turned off. Alternatively, the electric module 130, 230, 330 may be simply turned off and let to slow down on its own.

In some other cases, it may be desired to connect to LP shaft 24c, 124c to the electric module 130, 230, 330 while the LP shaft 24c, 124c is rotating. To do so, the electric module 130, 230, 330 may be operated in speed mode to match rotational speeds of the master gear 351, 452, 551 and first slave gear 352, 452, 552. Once the speeds of the master gear and of the first slave gear are matched, they may be meshed with one another to drivingly engage the electric module 130, 230, 330 to the LP shaft 24c, 124c.

In some cases, it may be desired to drivingly engage the electric module 130, 230, 330 to the LP shaft 24c, 124c while the LP shaft 24c, 124c is not rotating, that is, when the HP shaft 25c, 125c is rotating but not the LP shaft because a brake is applied on the propeller 12 or output shaft 112. The electric module 130, 230, 330 is first turned off and when the shaft 131, 231, 331 and the master gear 351, 451, 551 are at rest, the electric module 130, 230, 330 is drivingly engaged to the LP shaft 24c, 124c by meshing the master gear 351, 451, 551 to the first slave gear 352, 452, 552. Once the electric module 130, 230, 330 is drivingly engaged to the LP shaft 24c, 124c, the electric module 130, 230, 330 may be set in torque mode and a positive torque target may be sent to the electric module 130, 230, 330 such that the electric module 130, 230, 330 and the LP shaft 24c, 124c compound their power to drive the propeller 12 and output shaft 112. Alternatively, a negative torque target may be sent to the electric module 130, 230, 330 such that power is extracted from the LP shaft 24c, 124c to generate electricity with the electric module 130, 230, 330.

The embodiments of the transmission 440, 540, 640 described above with reference to Figs. 7-9 may reduce drag or losses of the electric module 130, 230, 330 when running on fuel power only. This is possible by the possibility to set the master gear 351, 451, 551 in a neutral position in which the electric module 130, 230, 330 is disengaged from both of the HP and LP shafts. Moreover, it may be advantageous to have the possibility to disengage the electric module 130, 230, 330 from both of the HP and LP shafts in a situation where a malfunction occurs with the electric module 130, 230, 330.

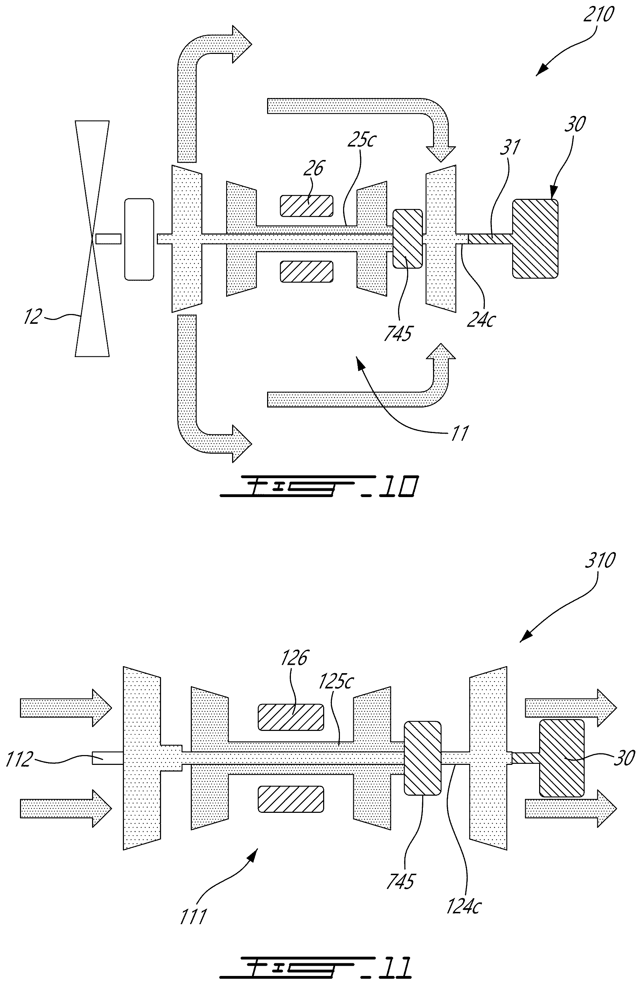

Referring now to Fig. 10, an hybrid power plant in accordance with another embodiment is shown at 210. The hybrid power plant 210 includes the electric module 30 and the turboprop gas turbine engine 11 described above with reference to Fig. 1.

In the embodiment shown, the electric module 30 is directly and permanently drivingly engaged to the LP shaft 24c. The LP shaft 24c is drivingly engaged to the HP shaft 25c via a sprag clutch 745. During engine start, the electric module 30 provides a torque to accelerate the LP shaft 24c directly and to accelerate the HP shaft 25c via the LP shaft 24c and via the sprag clutch 745 until the HP shaft 25c reaches a desired speed that is sufficient to sustain combustion in the combustion chamber 26. When combustion starts, the HP shaft 25c accelerates and becomes disengaged from the LP shaft 24c that rotates at a lower rotational speed than that of the HP shaft 25c. After engine start, the electric module 30 may be used as a generator to extract energy from the LP shaft 24c or may be used to compound power with the LP shaft 24c to drive the propeller 12.

It will be understood that, in an alternate embodiment, the sprag clutch 745 may be replaced by any other suitable kind of clutches (e.g., viscous clutch) that is operable to selectively engage or disengage the LP shaft 24c from the HP shaft 25c.

Referring now to Fig. 11, an hybrid power plant in accordance with another embodiment is shown at 310. The hybrid power plant 310 includes the electric module 30 and the turboshaft gas turbine engine 111 described above with reference to Fig. 2.

In the embodiment shown, the electric module 30 is directly and permanently drivingly engaged to the LP shaft 124c. The LP shaft 124c is drivingly engaged to the HP shaft 125c via a sprag clutch 745. During engine start, the electric module 30 provides a torque to accelerate the LP shaft 124c directly and to accelerate the HP shaft 125c via the LP shaft 124c and the sprag clutch 745 until the HP shaft 125c reaches a desired speed that is sufficient to sustain combustion in the combustion chamber 126. When combustion starts, the HP shaft 125c accelerates and becomes disengaged from the LP shaft 124c since the LP shaft 124c rotates at a lower rotational speed than that of the HP shaft 125c. After engine start, the electric module 30 may be used as a generator to extract energy from the LP shaft 124c or may be used to compound power with the LP shaft 124c to drive the output shaft 112.

It will be understood that, in an alternate embodiment, the sprag clutch 745 may be replaced by any other suitable kind of clutches (e.g., viscous clutch) that is operable to selectively engage or disengage the LP shaft 124c from the HP shaft 125c.

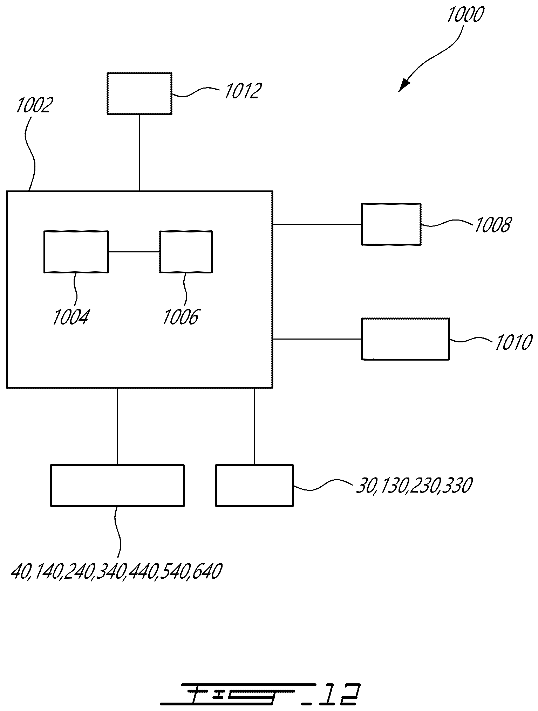

Referring now to Fig. 12, a control system for the hybrid power plants 10, 110, 210, 310 is shown at 1000. The control system 1000 includes a controller 1002 having a processing unit 1004 communicating with a computer-readable medium 1006. The computer-readable medium 1006 has instructions stored thereon executable by the processing unit 1004 for receiving speed data of the electric module 30, 130, 230, 330 from a speed sensor 1008 operatively connected to the controller 1002 and/or for receiving torque data of the electric module 30, 130, 230, 330 from a torque sensor 1010 operatively connected to the controller 1002. The controller 1002 is further operatively connected to the transmission 40, 140, 240, 340, 440, 540, 640 and to the electric module 30, 130, 230, 330.

The instructions executable by the processing unit 1004 are configured to control operation of the electric module 30, 130, 230, 330 and of the transmission 40, 140, 240, 340, 440, 540, 640. That is, the controller 1002 is able to set the electric module 30, 130, 230, 330 in the torque mode or in the speed mode. When a torque target is provided to the electric module 30, 130, 230, 330, the controller 1002 varies a torque generated by the electric module 30, 130, 230, 330 until the torque sensor 1008 notifies the controller 1002 that the target torque is reached. Similarly, when a speed target is provided to the electric module 30, 130, 230, 330, the controller 1002 varies a speed of the electric module 30, 130, 230, 330 until the speed sensor 1010 notifies the controller 1002 that the speed target is reached.

The instructions executable by the processing unit 1004 are configured to control operation of the different clutches 44, 45, 145, 344, of the different actuators 133, 233, 333, and of the different continuously variable transmissions 252, 253. Namely, the controller 1002 is able to control all of the steps described above to start the gas turbine engine 11, 111 and to selectively engage the electric module 30, 130, 230, 330 to the LP shaft 24c, 124c either to assist in driving the propeller 12 (Fig. 1) and output shaft 112 (Fig. 2) or to operate the electric module 30, 130, 230, 330 in generation mode to extract energy from the LP shaft 24c, 124c to generate electricity.

In the embodiment shown, the electric motor includes a motor controller 1012 or inverter that is operable to adjust current to achieve either a torque or a speed target determined by the controller 1002. In other words, the electric motor may include its own motor controller 1012 operatively connected to the controller 1002. The torque sensors and speed sensors may be operatively connected to the motor controller 1012 or to the controller 1002 as shown. The controller 1002 may also receive torque and speed information electronically from the motor controller 1012. The controller 1002 may command transmission actuators as needed, based on the instructions stored on the computer readable medium 1006 and based on external signals such as command inputs, speeds and torque information.

For starting a hybrid aircraft power plant, the high-pressure spool is drivingly engaged to the electric motor; a rotational speed of the high-pressure spool is increased to a target rotational speed; a mixture of air and fuel is ignited into a combustor of the gas turbine engine when the rotational speed of the high-pressure spool is at the target rotational speed; and a torque is transmitted between a low-pressure spool of the gas turbine engine and the electric motor.

In some embodiments, the electric motor is disengaged from the high-pressure spool after the igniting of the mixture of the air and the fuel in to the combustor.

In some cases, the drivingly engaging of the electric motor to the high-pressure spool includes switching a clutch from a disengaged configuration to an engaged configuration or includes operating a continuously variable transmission in a torque transmission mode. In some cases, the drivingly engaging of the electric motor to the high-pressure spool includes driving the low-pressure spool with the electric motor and transmitting a torque from the low-pressure shaft to the high-pressure shaft via a sprag clutch. In some cases, the drivingly engaging of the electric motor to the high-pressure spool includes meshing a master gear drivingly engaged to the electric motor with a first slave gear drivingly engaged to the high-pressure spool, and wherein the transmitting of the torque between the electric motor and the low-pressure spool includes disengaging the master gear from the first slave gear and meshing the master gear to a second slave gear drivingly engaged to the low-pressure spool. In some cases, the transmitting of the torque between the electric motor and the low-pressure spool of the gas turbine engine includes switching a clutch from a disengaged configuration to an engaged configuration or includes operating a continuously variable transmission in a torque transmission mode.

The present disclosure may allow to have a single electric motor for providing or extracting torque to/from the HP and LP spools. Having a single electric motor may save weight, reduce factory standard cost, and size of the power plant.

The embodiments described in this document provide non-limiting examples of possible implementations of the present technology. Upon review of the present disclosure, a person of ordinary skill in the art will recognize that changes may be made to the embodiments described herein without departing from the scope of the present technology. For example, although the electric modules and transmissions have been described as being coupled to turboprop and turboshaft gas turbine engines, the electric modules and transmissions of the present disclosure may be alternatively coupled to a turbofan gas turbine engine. Yet further modifications could be implemented by a person of ordinary skill in the art in view of the present disclosure, which modifications would be within the scope of the present technology.

## Claims

1. A hybrid aircraft power plant comprising:
a gas turbine engine (11; 111) having:
a high-pressure spool (25) including a high-pressure compressor (25a; 125a), a high-pressure turbine (25b; 125b), and a high-pressure shaft (25c; 125c) drivingly engaging the high-pressure turbine (25b; 125b) to the high-pressure compressor (25a; 125a); and
a low-pressure spool (24) including a low-pressure compressor (24a; 124a), a low-pressure turbine (24b; 124b), and a low-pressure shaft (24c; 124c) drivingly engaging the low-pressure turbine (24b; 124b) to the low-pressure compressor (24a; 124a);
an electric motor (32; 132; 232; 332) drivingly engaged to the low-pressure shaft (24c; 124c); and
a torque-transmitting device operatively connected to the high-pressure shaft (25c; 125c) and having an engaged configuration in which the torque-transmitting device drivingly engages the electric motor (32 .. 332) to the high-pressure shaft (25c; 125c) and a disengaged configuration in which the torque-transmitting device disconnects the electric motor (32 .. 332) from the high-pressure shaft (25c; 125c).

2. The hybrid aircraft power plant of claim 1, comprising a transmission (40; 140; 240; 340; 440; 540; 640) including the torque-transmitting device, the transmission (40 .. 640) having an input (41; 141; 241; 341) drivingly engaged by the electric motor (32 .. 332), a first output (42; 142; 242; 342) having an engaged configuration in which the first output (42... 342) is drivingly engaged to the low-pressure shaft (24c; 124c), and a second output (43; 143; 243; 343) having an engaged configuration in which the second output (43..343) is drivingly engaged to the high-pressure shaft (25c; 125c), the transmission (40 .. 640) operable in a first configuration in which the electric motor (32 .. 332) is drivingly engaged to the high-pressure shaft (25c; 125c) through the transmission (40 .. 640) and in a second configuration in which the electric motor (32 .. 332) is disengaged from the high-pressure shaft (25c; 125c).

3. The hybrid aircraft power plant of claim 2, wherein the electric motor (32 .. 332) is drivingly engaged to the low-pressure shaft (24c; 124c) in both of the first configuration and the second configuration of the transmission (40 .. 640).

4. The hybrid aircraft power plant of claim 2 or 3, wherein the torque-transmitting device comprises a clutch (45; 145; 345; 745), the engaged configuration corresponding to the first configuration of the transmission (40 .. 640) and the disengaged configuration corresponding to the second configuration of the transmission (40 .. 640).

5. The hybrid aircraft power plant of claim 4, wherein the clutch (345; 7 45) is a sprag clutch (345; 745), the sprag clutch (345; 745) transmitting a torque from the electric motor (32 .. 332) to the high-pressure shaft (25c; 125c) when the electric motor (32 .. 332) rotates at a higher rotational speed than that of the high-pressure shaft (25c; 125c).

6. The hybrid aircraft power plant of any claims 2 to 5, wherein the transmission (40 .. 640) is further operable in a third configuration in which the electric motor (32 .. 332) is drivingly engaged to the low-pressure shaft (24c; 124c) through the transmission (40 .. 640).

7. The hybrid aircraft power plant of claim 6, wherein the transmission (40 .. 640) includes a second clutch (45; 145; 345) between the electric motor (32 .. 332) and the low-pressure shaft (24c; 124c).

8. The hybrid aircraft power plant of any preceding claim, wherein the torque-transmitting device is a continuously variable transmission (240) having a continuously variable transmission input (241) drivingly engaged by the electric motor (32) and a continuously variable transmission output (243) drivingly engaging the high-pressure shaft (25c; 125c), the continuously variable transmission (240) operable to control a torque transmitted from the electric motor (32) to the high-pressure shaft (25c; 125c).

9. The hybrid aircraft power plant of clam 8, comprising a second continuously variable transmission (240) having a second continuously variable transmission input (241) drivingly engaged by the electric motor (32) and a second continuously variable transmission output (242) drivingly engaging the low-pressure shaft (24c; 124c), the second continuously variable transmission (240) operable to control a torque transmitted from the electric motor (32) to the low-pressure shaft (24c; 124c).

10. The hybrid aircraft power plant of any preceding claim, wherein the electric motor (32 .. 332) is drivingly engaged to the low-pressure shaft (24c; 124c), the torque-transmitting device comprises a sprag clutch (345; 745) operatively connected to both of the high-pressure shaft (25c; 125c) and the low-pressure shaft (24c; 124c), the sprag clutch (345; 745) operable to transmit a torque from the low-pressure shaft (24c; 124c) to the high-pressure shaft (25c; 125c) when a rotational speed of the low-pressure shaft (24c; 124c) is greater than that of the high-pressure shaft (25c; 125c).

11. The hybrid aircraft power plant of any of the preceding claims, further comprising:
a controller (1002) operatively connected to the electric motor (32; 132; 232; 332) and to the torque-transmitting device, the controller (1002) having a processing unit (1004) communicating with a computer-readable medium (1006) having instructions stored thereon executable by the processing unit (1004) for:
starting the gas turbine engine by operating the torque-transmitting device in the engaged configuration;
once the gas turbine engine is started, operating the torque-transmitting device in the disengaged configuration; and
after the starting of the gas turbine engine (11; 111), driving the low-pressure shaft (24c; 124c) with the electric motor (32; 132; 232; 332) by operating the electric motor (32...332) in a torque mode by varying a torque generated by the electric motor (32...332) until a target torque is reached, or operating the electric motor (32...332) in a speed mode by varying a speed of the electric motor (32...332) until a speed target is reached.
